# EUROPEAN PATENT SPECIFICATION

(11) **EP 2 901 864 B1**
(45) Date of publication and mention of the grant of the patent: **05.09.2018**
(21) Application number: 14163541.7
(22) Date of filing: 04.04.2014
(51) Int. Cl.: A23C 9/12, B67C 3/02

(54) **Apparatus for the production of yoghurt with skin like upper layer**
Vorrichtung für die Herstellung von Joghurt mit hautähnlicher oberer Schicht
Appareil pour la production de yaourt avec peau supérieure

(30) Priority: 04.02.2014 DK 201470055
(43) Date of publication of application: 05.08.2015
(73) Proprietor: JH Consulting V/Jørgen Henriksen, 4330 Hvalsø (DK)
(72) Inventor: Henriksen, Jørgen, 4330 Hvalsø (DK)
(74) Representative: Plougmann Vingtoft a/s

(56) References cited:
- FR-A1- 2 572 255

## Description

### FIELD OF THE INVENTION

The present invention relates to a system for automatic production of dairy products and in particular skin top Yoghurt.

### BACKGROUND OF THE INVENTION

Skin top Yoghurt is a traditional foodstuff in a number of countries among them Turkey and Greece. In existing plants the production is mainly manual and takes place as follows. In rooms arranged with shelves on both sides of a corridor empty containers are placed on the shelves and workers will enter the room, and with filling valves mounted on hoses they will fill containers one by one with the 90 Centigrade hot milk. This is a slow process and operating in a room which is slowly filled with open top containers with hot product is a big health hazard for the workers. After cooling to about 45 Centigrade the workers will pierce the skin on top of the milk in the containers with injection nozzles and inject Yoghurt culture into the milk under the skin. The containers are then left in the room where the temperature is kept at 43-45 Centigrade for about 3.5 hours, during that time the milk under the skin will turn into Yoghurt. The room temperature is then lowered to about 25 Centigrade. After cooling to about 25 Centigrade the containers are manually removed from the shelves and placed on trolleys for transport to the lidding sealing machines. This manual handling besides being time consuming also involves a quality risk as the fresh set Yoghurt under the skin can easily crack if subjected to rough handling. In Turkey there are factories producing more than 100 tons of this product daily, the work force for such capacities can be around 100 persons.

FR 2 572 255 discloses a system for producing yoghurts. The disclosed system moves cups filled with milk in a vertical plane during production of the yoghurts in the cups.

### SUMMARY OF THE INVENTION

The yoghurt is produced from un-homogenized whole milk which is heated to approximately 90 Centigrade, at which temperature germs are killed. The hot yoghurt is filled into retail containers and left to cool to approximately 45 Centigrade. During the cooling period, which will normally be around 1.5 hours the cream will raise to the top of the container forming a layer often referred to as a skin. This process is promoted at the high temperature. The skin will be pierced and Yoghurt or other culture injected under the skin, the quantity injected will be 2-3 % of the volume in the container. After injection of the culture the container will be left for some 3-3.5 hours at a temperature of 43-45 Centigrade, at which the Yoghurt culture will grow and turn the milk under the skin into set Yoghurt. Following this fermentation period the containers will be closed and cooled to approximately 5 Centigrade for marketing.

Containers filled with heated whole milk are conveyed on trays, first through a cooling zone in which the cream in the milk will raise to the top of the containers forming a skin layer on the top. After the cooling zone the trays will move under a Yoghurt culture injection device which will pierce the skin and inject Yoghurt culture into the milk under the skin. The trays will then be conveyed through a fermentation zone during growth of the Yoghurt culture in the milk and finally through a precooling zone for cooling of the product to room temperature before sealing and packing of the containers. Final cooling of the product before marketing takes place in a coldstore.

The system of the present invention dispenses containers on trays and conveys the trays under a hot milk filler, through a skin forming cooling zone, under a culture injection device, through a fermentation zone and precooling zone to a packing machine.

### BRIEF DESCRIPTION OF THE DRAWINGS

The drawings show a preferred embodiment of the invention.
FIG.1 shows a tray used for conveying the product through the different zones,
FIG.2 is a plan view of this embodiment of the invention,
FIG.3 is a vertical sectional view taken at line X-X in figure 2,
FIG.4 shows the chain system with tray supports,
FIG.5 shows the mobile filler,
FIG.6 shows a tray arranged for two different sizes of containers,
FIG.7 is a plan view of the system arranged for two different sizes of containers, and
FIG.8 is a vertical section of the system arranged for two different sizes of containers taken at line Y-Y in figure 7.

### DETAILED DESCRIPTION OF THE INVENTION

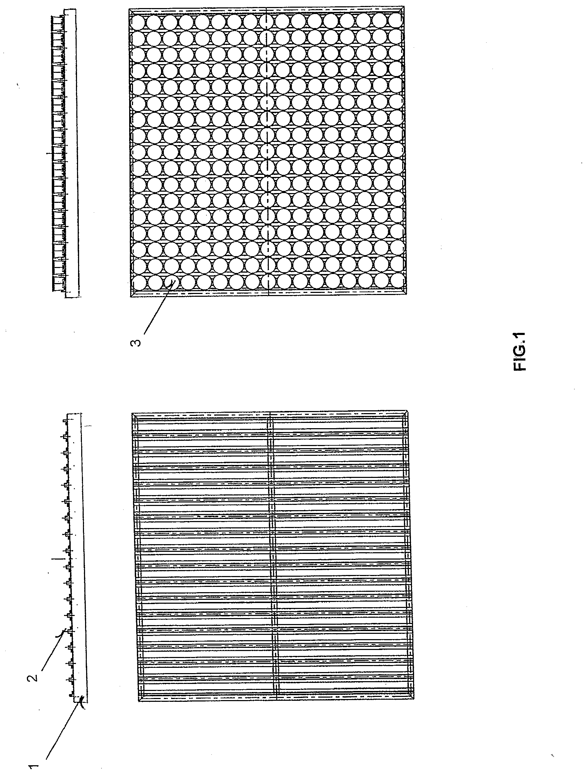

A tray for conveying the containers through the system is shown in FIG.1 where 1 is a stainless steel frame, 2 are guides mounted on the frame for alignment of the containers, and 3 show a tray with containers.

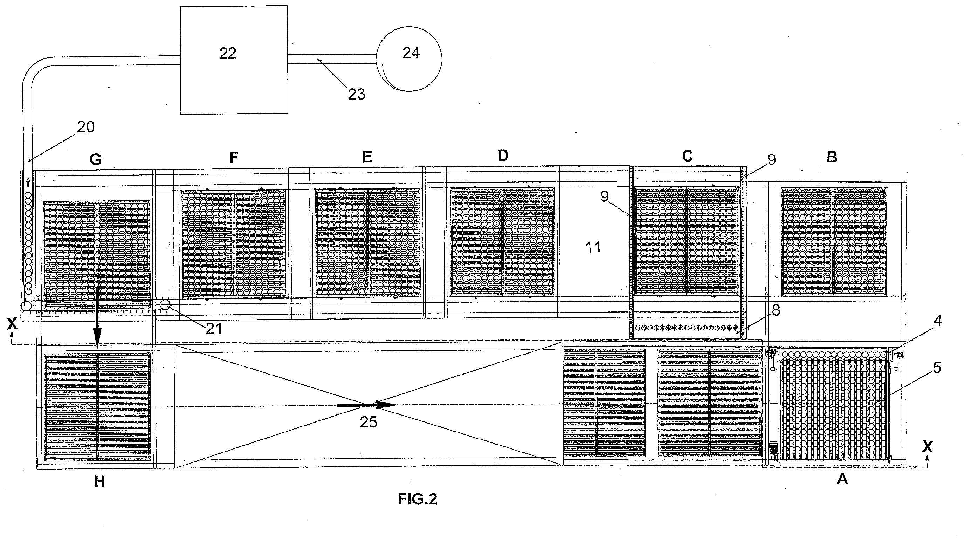

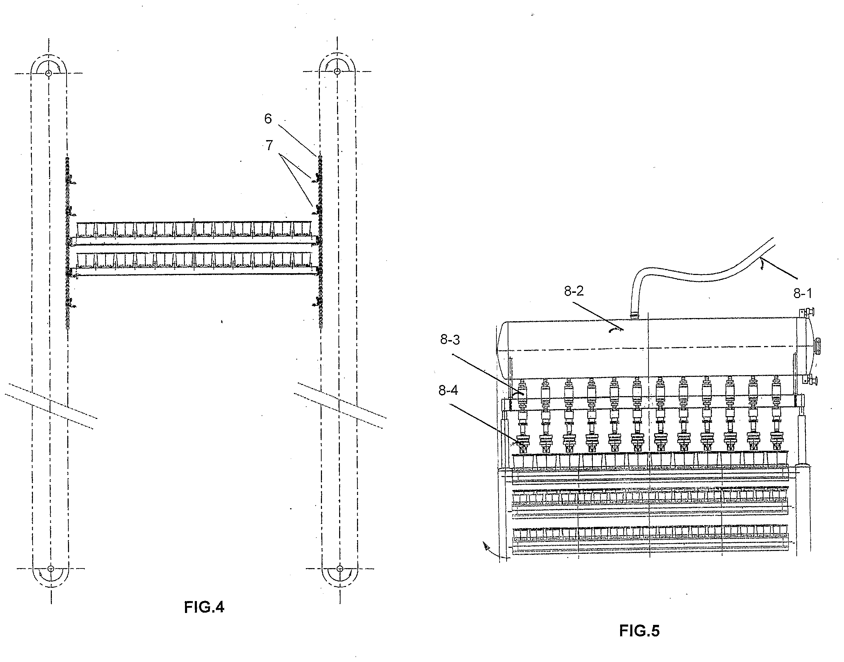

In FIG.2, 4 is a container dispenser, an empty tray will arrive to position A and intermittently be moved under the container dispenser 4, and at each stop a row of containers will be dispensed on to the tray, 5 is a container buffer system automatically refilling the dispensers container magazines when required.

The tray with empty containers will after arrival to position B be transferred to conveyor tower C when the upper tray supports are free.

The trays are intermittently moved down through conveyor tower C by 4 chains 6 having tray supports 7 as shown in FIG.4. When a tray with empty containers is in place on the upper tray supports, the mobile filler 8 will move intermittently forward across the tray, filling a row of containers at each stop, the filler is travelling on two racks 9. The product to be filled is un homogenized whole milk, the filling temperature around 90 Centigrade. The filling unit is as shown in FIG.5 with a flexible hose 8-1 connecting the horizontal tank 8-2 to the product feed pump, under the tank is mounted a row of flow meters 8-3 controlling the operation of the filling valves 8-4. During the downwards intermittent travel to the bottom of conveyor tower C the temperature in the product will drop to approximately 45 Centigrade, and a skin will be formed on top of the milk in the container.

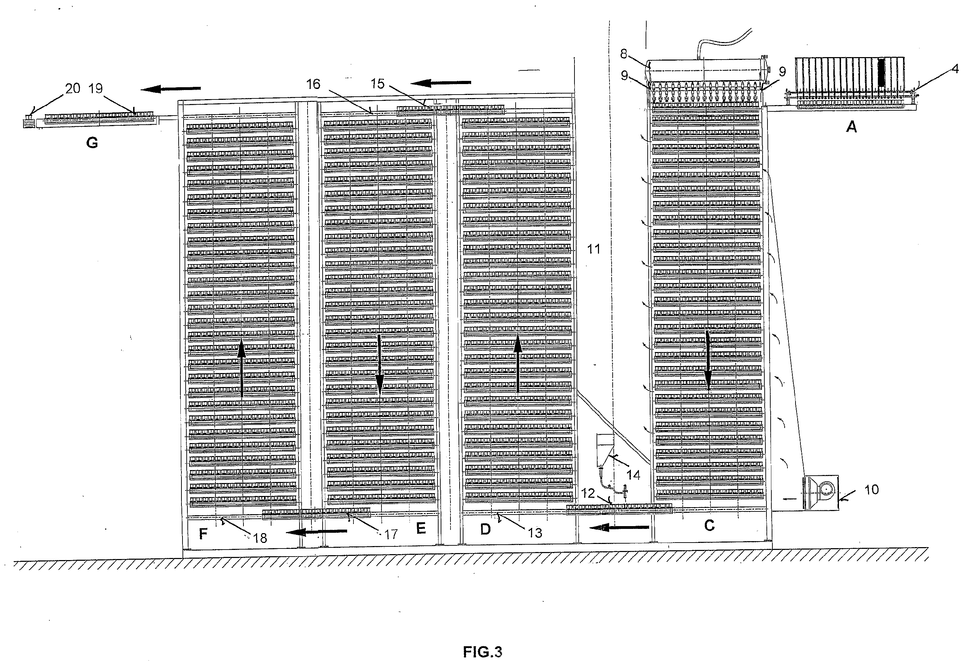

A blower unit 10 see FIG 3 is installed for control of the cooling process, the unit is equipped with a HEPA type filter for sterilization of the air being blown over the product, the blower unit has a fan and a heat exchanger for cooling/heating the air maintaining the same cooling effect regardless of changes in the ambient air temperature. A duct 11 is arranged between conveyor tower C and the neighbouring conveyor tower D for removal of an excess quantity of air having been heated by passing over the hot product. A certain amount of the warm air can be used for maintaining the temperature in the fermentation zone in conveyor towers D and E at 43 Centigrade.

From the bottom of conveyor tower C the tray 12 is moved intermittently to the empty tray supports 13 in the bottom of conveyor tower D, at each stop of the tray a row of injection nozzles 14 will pierce the skins on top of the milk in the containers and inject about 2-3 % of Yoghurt culture into the milk, The trays will now intermittently travel up through conveyor tower D and at the top in a continuous movement the upper tray 15 will be transferred to the upper tray supports 16 in conveyor tower E in, the trays will intermittently travel to the bottom of conveyor tower E, where transfer of the lower tray 17 to the lower tray supports 18 in conveyor tower F is done in a continuous movement. During the intermittently upwards travel in conveyor tower F the product is cooled to a temperature corresponding to the ambient temperature in the room.

At the top of conveyor tower F the tray 19 is transferred to position G, and from there intermittently to position H. At each stop of the tray a row of containers will be moved from the tray to the feedout conveyor 20 by the feedout unit 21.

The feedout conveyor will transfer the containers to the packing machine 22 where flushing with inert gas, foil lid sealing, snap-on lid application and date coding will take place. The feedout conveyor 23 from the packing machine will bring the containers to a packing table 24.

From position H the empty trays will pass a tray washing unit 25 during their travel to position A.

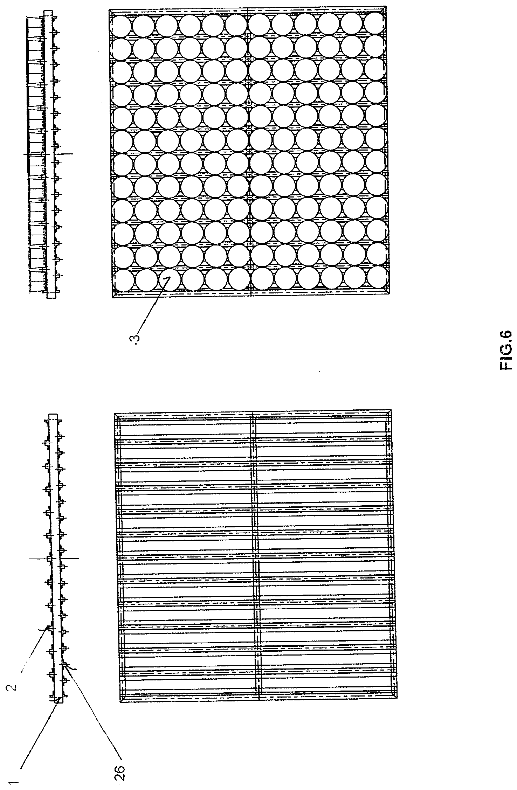

Many producers operate with two different sizes of containers. It is therefore practical to arrange the guide system on the trays for one type of containers on one side of the tray and for the second size on the other side of the tray as shown in FIG.6 guides 2 and 26. The sizes of the receptacles are suitable for receiving containers with a volume of a skin top dairy product suitable for consumer use, preferably between 0.1 and 2 litres.

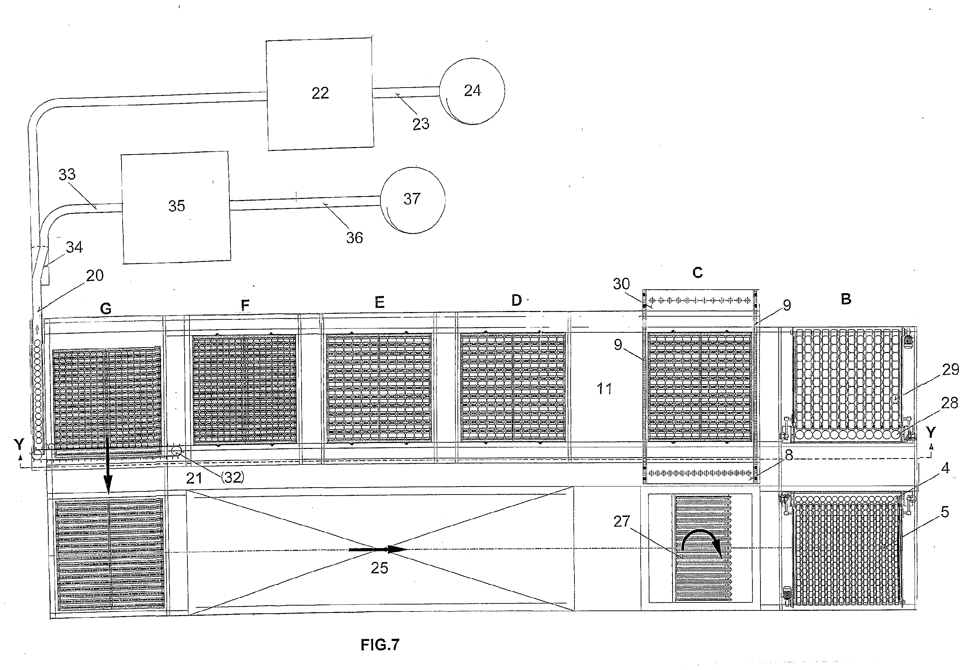

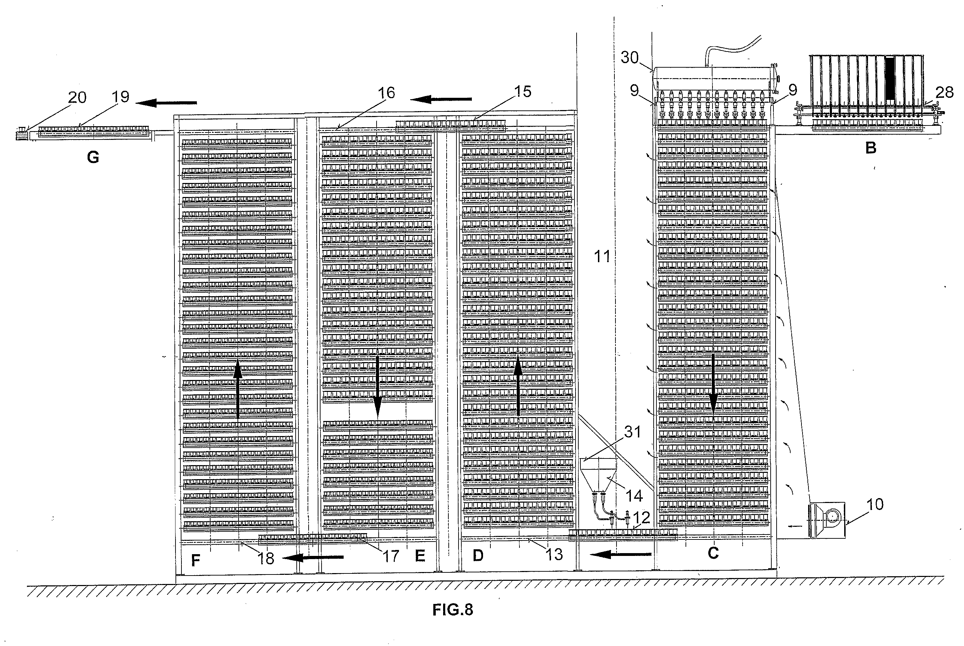

For operating the two different sizes of containers the following modifications and additions are required as shown in FIG 7 and FIG 8.

After the tray washing unit 25 an automatic turning device 27 is installed, which according to the program selected on the operator panel will turn the right side of the tray upwards. The tray for the second size container will pass under container dispenser 4 and then itermittently under container dispenser 28 where the second size of containers are dispensed on to the tray. Dispenser 28 has a buffer 29 for automatic refilling of the dispensers magazines. A second mobile filling unit 30 travelling also on rails 9 has the number of filling valves corresponding to the second size of container. Next to the culture injection unit 14 is installed a second injection unit 31 with the number of nozzles corresponding to the second size of container. When operating the second size of container a feedout unit 32 suitable for this size of container will substitute unit 21. An addition 33 to the feedout conveyor with a change over station 34 will change the flow of containers from packing machine 22 to the packing machine 35 for the second container size. Feedout conveyor 36 feeds the containers from packing machine 35 to the packing table 37.

FIG.8 illustrates the automatic change of container sizes, in conveyor tower E the lower part of the trays are for the small containers as well as the following sections of the system. The upper part of conveyor tower E is filled with the larger size of containers. Change of sizes start at the turning unit which will turn the side of the trays for the large container upwards, following container dispenser 28 will fill the trays with the large containers filler 30 will fill the hot milk and culture ejector 31 will perform the culture dosing. When the trays with large containers reach position G feedout unit 21 will be lifted away and automatically be replaced by feedout unit 32. Change over station on feedout conveyor 20 will switch to conveyor 33 and packing machine 35 with the following equipment will be activated.

## Claims

1. A system for producing a skin top dairy product and dosing it in a plurality of containers arranged on trays, the system comprising
- a first conveyor (C) for conveying the plurality of containers filled with heated milk for a period of time allowing a cream content in the milk to raise and to form a skin top on the milk,
- a dispensing device (14) with a pointed end for piercing, in each container, the skin top on the milk and dispensing a culture into the milk below the skin top,
- a second conveyor (D, E) for conveying the plurality of containers with milk and injected culture for a period allowing a fermentation to take place, and
- a device for sealing each one of the plurality of containers,wherein the first conveyor (C) and the second conveyor (D, E) are arranged for conveying trays with a plurality of containers in a vertical direction. and wherein the dispensing device is arranged between the first (C) and second (D, E) conveyors.

2. A system according to claim 1 comprising a blower (10) for blowing air across the trays in the first conveyor (C) for cooling the containers on these trays.

3. A system according to claim 2 wherein air leaving the first conveyor (C) is led to the second conveyor (D, E) for maintaining the temperature in the second conveyor at a desired level beneficial for the fermentation of the dairy product.

4. A system according to claim 3 wherein a third conveyor (F) downstream of the second conveyor (D, E) is arranged for cooling the fermented dairy product.

5. A system according to any one of claims 1-4 comprising trays having a first side with receptacles each having a first size for receiving containers of a first size, and a second side opposite the first side with receptacles each having a second size for receiving containers of a second size, the trays being configured for being received in the either of the first and second conveyors and with either of the first and second sides facing upward.

6. A system according to claim 5 wherein the sizes of the receptacles are suitable for receiving containers with a volume of a skin top dairy product suitable for consumer use, preferably between 0.1 and 2 litres.

## Patentansprüche

1. System zum Herstellen eines Milchprodukts mit Hautoberschicht und zum Dosieren davon in eine Vielzahl von Behältern, die auf Ablagen angeordnet sind, wobei das System Folgendes umfasst:
- eine erste Fördervorrichtung (C) zum Befördern der Vielzahl von Behältern, die mit erwärmter Milch befüllt sind, über einen Zeitraum, wobei es einem Sahnegehalt in der Milch erlaubt wird aufzusteigen und eine Hautoberschicht auf der Milch zu bilden,
- eine Abgabevorrichtung (14) mit einem spitzen Ende, in jedem Behälter, zum Durchstechen der Hautoberschicht auf der Milch und zum Abgeben einer Kultur in die Milch unter der Hautoberschicht,
- eine zweite Fördervorrichtung (D, E) zum Befördern der Vielzahl von Behältern mit Milch und injizierter Kultur über einen Zeitraum, wobei ein Stattfinden einer Fermentierung ermöglicht wird, und
- eine Vorrichtung zum Abdichten von jedem einzelnen aus der Vielzahl von Behältern, wobei die erste Fördervorrichtung (C) und die zweite Fördervorrichtung (D, E) zum Befördern von Ablagen mit einer Vielzahl von Behältern in einer vertikalen Richtung angeordnet sind,
und wobei die Abgabevorrichtung zwischen der ersten (C) und der zweiten (D, E) Fördervorrichtung angeordnet ist.

2. System nach Anspruch 1, umfassend ein Gebläse (10) zum Blasen von Luft über die Ablagen in der ersten Fördervorrichtung (C) zum Kühlen der Behälter auf diesen Ablagen.

3. System nach Anspruch 2, wobei Luft, die die erste Fördervorrichtung (C) verlässt, zu der zweiten Fördervorrichtung (D, E) zum Aufrechterhalten der Temperatur in der zweiten Fördervorrichtung auf einem gewünschten Niveau, das für die Fermentierung des Milchprodukts vorteilhaft ist, geleitet wird.

4. System nach Anspruch 3, wobei eine dritte Fördervorrichtung (F) nachgelagert zu der zweiten Fördervorrichtung (D, E) zum Kühlen des fermentierten Milchprodukts angeordnet ist.

5. System nach einem der Ansprüche 1-4, umfassend Ablagen mit einer ersten Seite mit Behältnissen, die jeweils eine erste Größe aufweisen, zum Aufnehmen von Behältern einer ersten Größe, und einer zweiten Seite gegenüber der ersten Seite mit Behältnissen, die jeweils eine zweite Größe aufweisen, zum Aufnehmen von Behältern einer zweiten Größe, wobei die Ablagen dazu konfiguriert sind, in einer von der ersten und der zweiten Fördervorrichtung und mit einer von der ersten und der zweiten Seite nach oben zeigend aufgenommen zu werden.

6. System nach Anspruch 5, wobei die Größen der Behältnisse zum Aufnehmen von Behältern mit einem Volumen eines Milchprodukts mit Hautoberseite, das zur Verwendung durch Verbraucher geeignet ist und bevorzugt zwischen 0,1 und 2 Litern liegen, geeignet sind.

## Revendications

1. Système destiné à la production d'un produit laitier à peau de lait en surface et à son dosage dans une pluralité de contenants disposés sur des plateaux, ledit système comprenant
- un premier convoyeur (C) pour le transport de la pluralité de contenants remplis avec du lait chauffé pendant une période de temps permettant à la crème contenue dans le lait de remonter et de former une peau de lait en surface sur le lait,
- un dispositif de distribution (14) avec une extrémité pointue pour percer, dans chaque contenant, la peau de lait en surface sur le lait et pour distribuer une culture dans le lait sous la peau de lait en surface,
- un deuxième convoyeur (D, E) pour le transport de la pluralité de contenants avec lait et la culture injectée pour une période à la fermentation de se dérouler, et
- un dispositif destiné à assurer l'étanchéité de chaque contenant de la pluralité de contenants, ledit premier convoyeur (C) et ledit deuxième convoyeur (D, E) étant agencés pour transporter des plateaux avec une pluralité de contenants selon une direction verticale
et ledit dispositif de distribution étant agencé entre les premier (C) et deuxième (D, E) convoyeurs.

2. Système selon la revendication 1, comprenant un souffleur (10) pour souffler de l'air à travers les plateaux dans le premier convoyeur (C) en vue de refroidir les contenants sur ces plateaux.

3. Système selon la revendication 2, ledit air quittant le premier convoyeur (C) étant dirigé vers le deuxième convoyeur (D, E) pour maintenir la température dans le deuxième convoyeur à un niveau souhaité bénéfique pour la fermentation du produit laitier.

4. Système selon la revendication 3, un troisième convoyeur (F) en aval du second convoyeur (D, E) étant agencé pour refroidir le produit laitier fermenté.

5. Système selon l'une quelconque des revendications 1 à 4 comprenant des plateaux comportant un premier côté avec des réceptacles possédant chacun une première taille pour recevoir des contenants d'une première taille et un second côté opposé au premier côté avec des réceptacles possédant chacun une seconde taille pour recevoir de contenants d'une seconde taille, lesdits plateaux étant conçus pour être reçus dans l'un ou l'autre des premier et deuxième convoyeurs et avec l'un ou l'autre des premier et second côtés faisant face vers le haut.

6. Système selon la revendication 5, lesdites tailles des réceptacles étant appropriées pour recevoir des contenants avec un volume d'un produit laitier à peau de lait en surface destiné à être consommé par des consommateurs, de préférence comprise entre 0,1 et 2 litres.
